# EUROPEAN PATENT APPLICATION

(11) **EP 4 753 050 A1**
(43) Date of publication of application: **03.06.2026**
(21) Application number: 24865799.1
(22) Date of filing: 10.09.2024
(51) Int. Cl.: H01M 50/291, H01M 50/204

(54) **BATTERY PACK**

(30) Priority: 11.09.2023 KR 20230120233
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); JEON, Jong Pil, Daejeon 34122 (KR); HUR, Nam Hoon, Daejeon 34122 (KR)
(74) Representative: Plasseraud IP
(86) International application number: PCT/KR2024/013658
(87) International publication number: WO 2025/058360

(57) **Abstract**

A battery pack including a pack case having a lower and upper case defining an interior space and a plurality of cell units. Each cell unit includes battery cells stacked in a first direction. The plurality of cell units are located within the interior space. A cell side beam is located on a side of each cell unit. The lower case includes, a first and second frame, a base plate, a front cover, a rear cover, a center beam extending in the first direction, and a cross beam extending in a second direction perpendicular to the first direction. Each of the cell units is located within a space defined by the cross beam, the center beam, the side frames, and one of the front cover or the rear cover, and each of the cell side beams are coupled to the cross beam.

## Description

### [Cross-Reference to Related Applications]

This application claims the benefit of priority from Korean Patent Application No. 10-2023-0120233, filed on Sep. 11, 2023, the disclosure of which is incorporated herein by reference.

### [Technical Field]

The present disclosure relates to a battery pack, and more particularly to a battery pack with increased productivity, improved energy density and structural rigidity.

### [Background]

A battery pack applied to an electric vehicle or the like includes a plurality of battery cells to obtain high power output. Each of the battery cells is capable of repeatedly charging and discharging by electrochemical reactions between components, including positive and negative electrode current collectors, separators, active materials, electrolytes, and the like.

Meanwhile, the recent need for high-capacity structures, including their use as a source of energy storage, has increased the demand for battery packs with multiple battery cells connected in series and/or parallel and accommodated within a pack case. There is a need for ways to improve structural safety and energy density while increasing the productivity of battery packs.

### [Summary]

### [Technical Problem]

The technical problem that the present disclosure seeks to address is to provide a battery pack with increased productivity, improved energy density and structural rigidity.

### [Technical Solution]

To accomplish the technical task, the present disclosure provides a battery pack including: a pack case, the pack case including a lower case and an upper case, the upper case and the lower case defining an interior space, and a plurality of cell units, each cell unit including a plurality of battery stacked in a first direction, the plurality of cell units being located within the interior space, and a cell side beam located on a side of the cell unit, wherein the lower case includes a first side frame, a second side frame, a base plate coupled to a lower part of each of the first and second side frames, a front cover defining a front side wall of the lower case, a rear cover defining a rear side wall of the pack case, a center beam extending in the first direction, and a cross beam extending in a second direction perpendicular to the first direction, wherein each of the cell units is located within a space defined by the cross beam, the center beam, the side frames, and one of the front cover or the rear cover, and each of the cell side beams are coupled to the cross beam.

In some embodiments, a height of each cell side beam may be greater than a height of the cross beam.

In some embodiments, each cell side beam includes a concave part, and the cross beam may be at least partially seated within the concave parts of the cell side beams.

In some embodiments, a depth of each concave part may be less than or equal to half a thickness in the first direction of the cross beam.

In some embodiments, each concave part may extend over an entire length of the corresponding cell side beam in the second direction, the concave part facing the cross beam.

In some embodiments, each cell side beam may have a protruding part, the protruding part protruding in the first direction relative to the concave part, the protruding part being configured to be coupled with the cross beam by engagement of a concavo-convex structure.

In some embodiments, each cell side beam may have a protruding part, the protruding part protruding in the first direction relative to the concave part, the protruding part being configured to be coupled with the cross beam by fastener.

In some embodiments, the cross beam may be fixed to the first side frame and the second side frame by welding.

In some embodiments, a first end of the cross beam may be welded to the first side frame and a second end of the cross beam may be welded to the second side frame.

In some embodiments, a height of the cross beam may be 40% to 90% of a height of the first and second side frames.

In some embodiments, each of the plurality of battery cells of the cell units may be at least partially exposed toward at least one of the upper case and the lower case.

Another aspect of the present disclosure provides a battery pack including a pack case, the pack case including a lower case and an upper case, the lower case and the upper case defining an interior space, and a plurality of cell units, each cell unit including a plurality of battery cells stacked in a first direction, the plurality of cell units being located within the interior space, and a cell side beam located on a side of the cell unit. The lower case includes a first side frame, a second side frame, a base plate coupled to a lower part of each of the first and second side frames, a front cover defining a front side wall of the lower case, a rear cover defining a rear side wall of the pack case, one center beam extending in the first direction, and a cross beam extending in a second direction perpendicular to the first direction, wherein cell side beams of adjacent cell units face each other with the cross beam between them, wherein each of the adjacent cell side beams includes a protruding part protruding toward the cross beam, and a concave part configured to at least partially accommodate the cross beam.

In some embodiments, the adjacent cell side beams located on either side of the cross beam may be coupled to the cross beam by bolts inserted in a third direction perpendicular to the first direction and the second direction.

In some embodiments, each cell unit includes an additional side beam, the additional aside beam may be coupled to the front cover or the rear cover.

In some embodiments, the interior space is divided into four compartments, the four compartments being arranged in a 2x2 configuration by the center beam and the cross beam, and one cell unit may be located in each compartment.

### [Advantageous Effects]

The battery pack of the present disclosure has the effect of providing a battery pack with greater freedom of assembly, which can increase productivity and provide a battery pack with improved energy density and structural rigidity.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description, i.e., unintended effects of practicing the exemplary embodiments of the present disclosure may also be derived from the exemplary embodiments of the present disclosure by one of ordinary skill in the art.

### [Brief Description of the Drawings]

FIG. 1 is a perspective view of a battery pack according to one embodiment of the present disclosure.
FIG. 2 is an exploded perspective view illustrating the appearance of a battery pack according to one embodiment of the present disclosure.
FIG. 3 is a perspective view of a cell unit accommodated within the battery pack.
FIG. 4 is a cross-sectional view illustrating an incision through the cell unit 110 along line A-A' of FIG. 3.
FIG. 5 is a partial cross-sectional view illustrating how two neighboring cell units are coupled with a cross beam between them according to one embodiment of the present disclosure.
FIG. 6 is a partial cross-sectional view illustrating how two neighboring cell units are coupled with a cross beam between them according to another embodiment of the present disclosure.
FIG. 7 is a view illustrating how a cell unit facing a front cover or rear cover may be coupled to the front cover or rear cover.
FIG. 8 is a view of a cross-section of the incision along the cross-beam of FIG. 2.

### [Best Mode for Carrying out the Invention]

Hereinafter, preferred embodiments of the concept of the present invention will be described in detail with reference to the accompanying drawings. However, embodiments of the present invention may be modified in many other forms, and it should not be construed that the scope of the present invention is limited by the embodiments described below. It is preferred that the embodiments of the concept of the present invention be construed as being provided to more fully explain the inventive concept to one of ordinary skill in the art. Like designations generally refer to like elements. Furthermore, various elements and areas in the drawings are schematically depicted. Accordingly, the concept of the present invention is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present invention.

The terms used in this application are used to describe certain embodiments only and is not intended to limit the concept of the present invention. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present invention belongs. It is further understood that such terms, as commonly used and as defined in dictionaries, are to be construed to have a meaning consistent with their meaning in the context of the art to which they relate, and are not to be construed in an unduly formal sense unless expressly defined herein.

When an embodiment can be instantiated differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present invention should not be construed as limited to the specific geometry of the areas shown herein, and should include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

### (First embodiment)

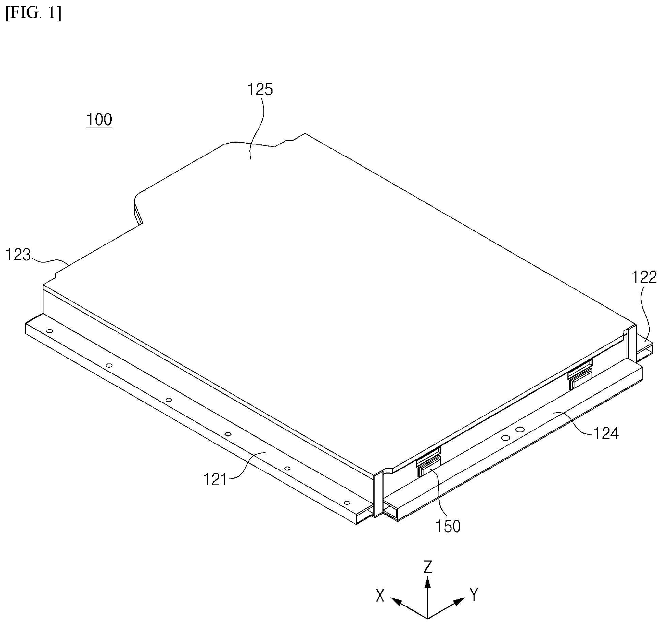

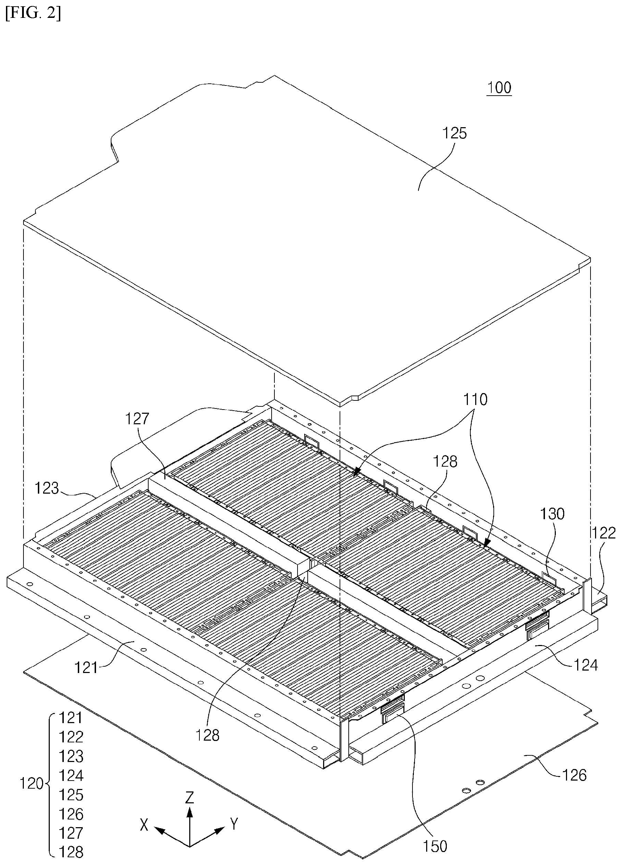

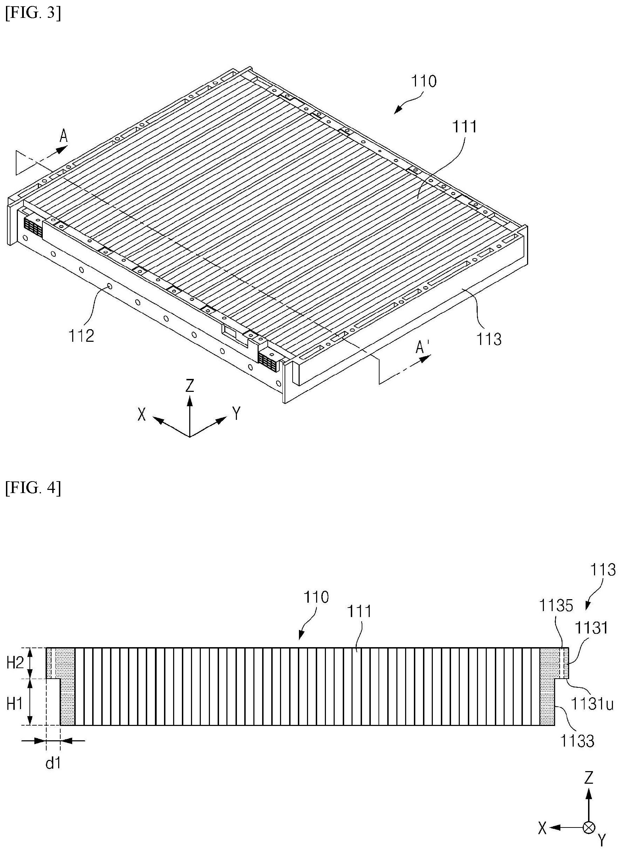

FIG. 1 is a view illustrating the appearance of a battery pack 100 according to one embodiment of the present disclosure. FIG. 2 is an exploded perspective view illustrating a battery pack 100 according to one embodiment of the present disclosure. FIG. 3 is a perspective view illustrating a cell unit 110 accommodated within the battery pack 100.

In FIGS. 1 through 3, the battery pack 100 is shown as being defined in a vertical coordinate system defined by a first direction along the x-axis, a second direction along the y-axis, and a third direction along the z-axis, perpendicular to each other, but the first direction, second direction, and third direction need only be perpendicular relative to each other and are not particularly limited.

Referring to FIGS. 1 to 3, a battery pack 100 according to one embodiment of the present disclosure may include at least one or more cell units 110 and a pack case 120 having an interior space formed to accommodate at least one or more of the cell units 110.

In some embodiments, the cell units 110 may include a battery module wherein the battery cells are accommodated within a module frame, and the battery module may be accommodated within the interior space. While the battery cells 111 are described herein as being accommodated directly within the interior space of the pack case 120 without being accommodated within the module frame, one of ordinary skill in the art will understand that the same may apply when the battery cells are configured as a battery module.

The battery cell 111 may be, for example, a pouch-type battery cell with high energy density and ease of stacking, or it may be a prismatic or cylindrical battery cell. Although the battery cell 111 is described herein with respect to a pouch-type battery cell, one of ordinary skill in the art will understand that the same may be applied with respect to a prismatic or cylindrical battery cell.

The plurality of battery cells 111 may be electrically connected to each other via busbars provided within the busbar frame 112 and may be accommodated within the pack case 120, and may be fixed to the bottom surface of the pack case 120, for example by a heat dissipating resin layer.

The pack case 120, as a component for forming a space for storing the cell units 110, may include a pair of side frames 121, 122, a base plate 126 coupled to a lower part of each of the pair of side frames 121, 122, and a top plate 125 coupled to an upper part of each of the side frames 121, 122, a front cover 124 forming a front wall of the pack case 120, and a rear cover 123 forming a rear wall of the pack case 120.

In some embodiments, the top plate 125 may comprise the upper case, and the base plate 126, side frames 121, 122, front cover, and rear cover 123 may comprise the lower case.

For example, as shown in FIG. 2, the pack case 120 may include a first side frame 121 positioned on the left side and a second side frame 122 positioned on the right side relative to the base plate 126. That is, the first side frame 121 may be coupled to the left end of the base plate 126. The second side frame 122 may be coupled to the right end of the base plate 126.

In some embodiments, the pack case 120 may further include a gas venting unit 130. In some embodiments, the gas venting unit 130 of the battery pack 100 may be provided on an inner side of the interior space of the pack case 120. The gas venting unit 130 may have a plate-like shape overall. The gas venting unit 130 may be configured to rupture, at least in part, when the internal gas pressure of the pack case 120 goes above a predetermined level.

The gas venting unit 130 may be configured such that, when a portion of the gas venting unit 130 is ruptured as described above, gas in the interior space flows into the gas inlet. In other words, when a portion of the gas venting unit 130 is ruptured, the gas pressure inside the pack case 120 is greater than the atmospheric pressure outside the pack case, so that the gas in the interior space of the pack case 120 travels along the gas discharge flow path, and the gas can be discharged to the outside through the gas discharge hole at the end of the gas discharge flow path through the venting devices 150 of the rear cover 123 and the front cover 124.

To this end, the rear cover 123 and the front cover 124 may have flow paths through which gas can flow, similar to the first side frame 121 and the second side frame 122. The flow paths of the rear cover 123 and the front cover 124 may be in fluid communication with gas discharge flow paths and gas discharge holes formed in the interior of the side frames 121, 122.

The flow paths of the rear cover 123 and the front cover 124 are in fluid communication with the venting device 150, such that gases can be discharged through the venting device 150.

The cell unit 110 may include a plurality of battery cells 111 stacked in a first direction (e.g., in the x-axis direction), and cell side beams 113 may be provided on either side of the first direction of the plurality of battery cells 111. As previously described, the plurality of battery cells 111 may be electrically connected to each other via busbars provided within a busbar frame 112.

FIG. 4 is a cross-sectional view illustrating an incision through the cell unit 110 along line A-A' of FIG. 3.

Referring to FIGS. 3 and 4, cell side beams 113 are provided on either side of a plurality of battery cells 111 stacked in a first direction (e.g., in the x-axis direction).

In some embodiments, the battery cells 111 may have a thin plate-like body, preferably in the structure of a pouch cell. The pouch cell may comprise a structure in which positive electrodes, separators and negative electrodes are alternately stacked to form the electrode assembly, with electrode tabs protruding from at least one side and connected to the cell leads. The positive electrode and negative electrode may be prepared by applying a slurry such as electrode active material, binder resin, conductive material, and other additives to at least one side of the current collector. For the positive electrode, conventional positive electrode active materials such as lithium-containing transition metal oxides may be used, and for the negative electrode, conventional negative electrode active materials such as lithium metals, carbon materials, and metal compounds or mixtures thereof from which lithium ions can be absorbed and released may be used. Also, a conventional porous polymer film used in lithium secondary batteries can be used as the separator.

An electrolyte accommodated in the cover with the electrode assembly may be used as an electrolyte for a conventional lithium secondary battery. The cover is formed of a sheet material and is provided with a compartment for accommodating the electrode assembly. Preferably, the cover is formed by coupling a first case and a second case formed by processing the sheet material into a predetermined shape. The sheet material comprising the cover is a multi-layer structure comprising an outermost outer resin layer made of an insulating material such as polyethylene terephthalate (PET) or nylon, a metal layer made of aluminum that maintains mechanical strength and prevents moisture and oxygen from penetrating, and an inner resin layer made of a polyolefin-based material that is thermally adhesive and acts as a sealing material.

The sheet material forming the cover may have a predetermined adhesive resin layer interposed between the inner resin layer and the metal layer, and between the outer resin layer and the metal layer, as required. The adhesive resin layer is for smooth attachment between dissimilar materials and is formed in a single layer or multiple layers, and the material is typically a polyolefin-based resin, or for smooth processing, a polyurethane resin may be used, and mixtures thereof may also be used.

In some embodiments, the cell side beams 113 may be supported by being fixed to the busbar frame 112.

The plurality of battery cells 111 included in each cell unit 110 may be at least partially exposed toward the top plate 125 and/or base plate 126 of the pack case 120. In some embodiments, the cell side beams 113 may extend along the upper or lower surface of the plurality of battery cells 111 to act as module frames. In some embodiments, the cell side beams 113 may not completely surround the plurality of battery cells 111 at all times while acting as a module frame. In this case, the plurality of battery cells 111 may be at least partially exposed toward the top plate 125 and/or base plate 126 of the pack case 120.

In some embodiments, the cell side beams 113 may not extend along the upper surface of the plurality of battery cells 111. In some embodiments, the cell side beams 113 may not extend along the lower surface of the plurality of battery cells 111. In some embodiments, the cell side beams 113 may not extend along both the upper surface and the lower surface of the plurality of battery cells 111.

In some embodiments, the cell side beam 113 may include a concave part 1133 that at least partially accommodates the cross beam 128, as described later. In some embodiments, the cell side beam 113 may have a protruding part 1131 protruding in the first direction relative to the concave part 1133.

The concave part 1133 may have a first height H1 in a third direction (e.g., in the z-axis direction). The first height H1 may be substantially the same as the height of the cross beam 128 described later. Thus, the height in the third direction of the cell side beam 113 is greater compared to the height of the cross beam 128.

The concave part 1133 may extend in the longitudinal direction (e.g., in the y-axis direction) of the cell side beam 113.

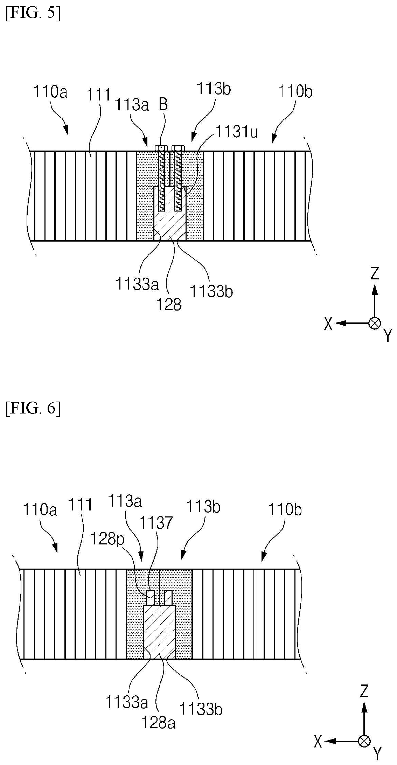

FIG. 5 is a partial cross-sectional view illustrating how two neighboring cell units 110a, 110b are coupled together with a cross beam 128 between them, according to one embodiment of the present disclosure.

Referring to FIGS. 4 and 5, the first cell unit 110a is adjacent to the second cell unit 110b with the cross beam 128 between them. A first cell side beam 113a of the first cell unit 110a faces a second cell side beam 113b of the second cell unit 110b with the cross beam 128 in between. The first cell side beam 113a and the second cell side beam 113b have a cross-section that is symmetrical to each other in the first direction (e.g., in the x-axis direction).

The first cell side beam 113a has a first concave part 1133a, and the second cell side beam 113b has a second concave part 1133b. The cross beam 128 may be seated within the space defined by the first concave part 1133a and the second concave part 1133b.

In FIG. 5, the convex part of the first cell side beam 113a and the convex part of the second cell side beam 113b are shown in contact with each other, but the present disclosure is not limited to this. In some embodiments, the depth d1 (see FIG. 4) of the concave part 1133 may be less than half of the thickness in a first direction (e.g., x-axis direction) of the cross beam 128, in which case the convex part of the first cell side beam 113a and the convex part of the second cell side beam 113b may not contact each other.

The sides of the cross beam 128 may contact the sides of the first cell side beam 113a and the second cell side beam 113b forming the concave parts 1133a, 1133b.

The first cell side beam 113a and the second cell side beam 113b may be coupled with the cross beam 128 by means of fasteners, such as bolts. For this purpose, a through-hole 1135 may be formed in each of the first cell side beam 113a and the second cell side beam 113b. The through-hole 1135 may be formed in a respective convex part of the first cell side beam 113a and the second cell side beam 113b. The through-holes 1135 may extend in a third direction (e.g., in the z-axis direction). The cross beam 128 may be provided with fastening holes in which fasteners inserted through the through-holes 1135 may be coupled. The bolt B may extend through the through-hole 1135 and into the fastening hole provided in the cross beam 128.

The concave parts 1133a, 1133b may extend in the longitudinal direction of the cell side beams 113a, 113b over the entire length of the cell side beams 113a, 113b facing the cross beam 128. In other words, the concave parts 1133a, 1133b may extend in a second direction (e.g., in the y-axis direction) over the entire length of the cell side beams 113a, 113b.

The convex lower surface 1131u forming a step between the convex part 1131 and the concave part 1133 may be in close contact with the upper surface of the cross beam 128.

In FIG. 5, the cross beam 128 and the cell side beams 113a, 113b are shown as being coupled by fasteners such as bolts B, but the present disclosure is not limited to this. FIG. 6 is a partial cross-sectional view schematically illustrating how two neighboring cell units 110a, 110b may be coupled together with a cross beam 128 between them, according to another embodiment of the present disclosure.

Referring to FIG. 6, the cross beam 128a may have a concavo-convex structure 128p that may be coupled with the cell side beams 113a, 113b. Further, the cell side beams 113a, 113b may have a complementary concavo-convex structure 128p that may be engaged and coupled with the concavo-convex structure 128p of the cross beam 128a.

In some embodiments, as shown in FIG. 6, the cross beam 128a may have a convex part protruding toward the lower surface of the protruding part of the cell side beams 113a, 113b, and the cell side beams 113a, 113b may have a concave part to accommodate the convex part. A person of ordinary skill in the art will understand that engagement coupling may be achieved by having a convex part protruding from the lower surface of the protruding part of the cell side beams 113a, 113b toward the cross beam 128a, and having a concave part on the upper surface of the cross beam 128a to accommodate the convex part.

Since the cell side beams 113 are directly coupled to the cross beams 128, the structural rigidity can be increased. In addition, high productivity can be achieved because the cross-sectional shape of the cell side beams 113 does not limit the assembly sequence.

### (Second embodiment)

Referring again to FIG. 2, the pack case 120 of the battery pack 100 may have one center beam 127 and one cross beam 128. The interior space may be divided into four compartments arranged in a 2x2 configuration by the center beam 127 and cross beam 128. Further, each of the four compartments may accommodate one cell unit 110.

Since only one cross beam 128 is provided in this embodiment, the efficiency of the internal space may be increased, thereby increasing the energy density of the battery pack 100.

The manner in which the cell unit 110 is coupled to the cross beam 128 is as previously described with reference to FIGS. 5 and 6. The cell unit 110 faces the front cover 124 or the rear cover 123 on the side not facing the cross beam 128.

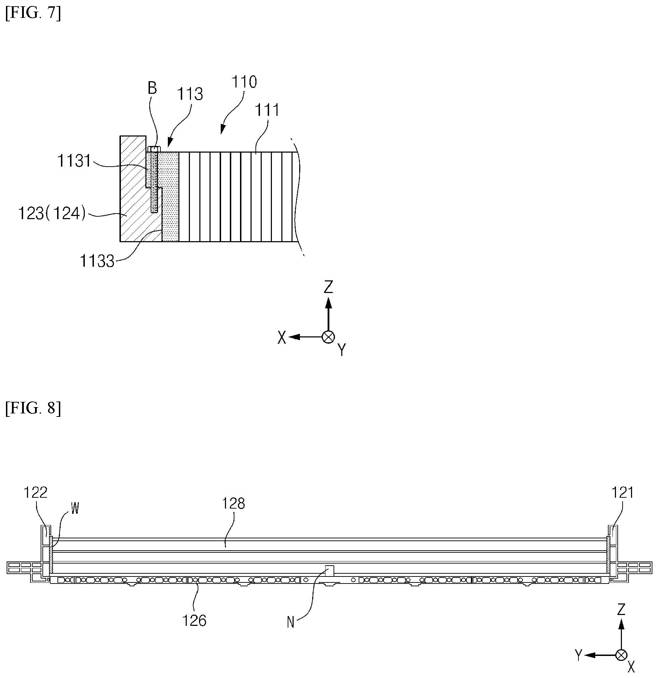

FIG. 7 is a view illustrating how a cell unit 110 facing a front cover 124 or rear cover 123 may be coupled to the front cover 124 or rear cover 123.

Referring to FIG. 7, the front cover 124 or rear cover 123 may have a protruding part corresponding to concave part 1133 of the cell side beam 113. In some embodiments, the cell side beam 113 may be coupled to the front cover 124 or rear cover 123 by means of a fastener, such as a bolt B. For this purpose, the cell side beam 113 may be formed with through-holes as shown in FIG. 4, and the front cover 124 or rear cover 123 may be provided with fastening holes at locations corresponding to the through-holes.

The bolts B may couple the cell side beam 113 and the front cover 124 or rear cover 123 to each other by extending through the through-holes to fastening holes in the front cover 124 or rear cover 123.

While FIG. 7 illustrates an example of coupling the cell side beam 113 to the front cover 124 or rear cover 123 using fasteners such as bolts B, one of ordinary skill in the art will understand that the cell side beam 113 and the front cover 124 or rear cover 123 may be coupled to each other by engagement coupling using a concavo-convex structure, as in the embodiment described with reference to FIG. 6.

In some embodiments, the pack case 120 may further include additional cross beams adjacent to the front cover 124 or rear cover 123. In this case, the cell side beams 113 may be coupled to the additional cross beams. In this case, the structural strain on the front cover 124 or rear cover 123 may be relieved, since the mechanical load generated by the cell unit 110 is transferred to the additional cross beam.

FIG. 8 is a cross-sectional view of an incision along the cross beam 128 of FIG. 2.

Referring to FIG. 8, the cross beam 128 may be coupled to a pair of side frames 121, 122 by welding. That is, one end of the cross beam 128 may be welded and coupled to one of the pair of side frames 121, 122, and the other end of the cross beam 128 may be welded and coupled to the other of the pair of side frames 121, 122.

Since the cross beam 128 was previously bolted to the side frames 121, 122, through-holes for bolting were provided in the sides of the side frames at locations corresponding to the cross beam 128.

Since the cross beam 128 is coupled to the side frames 121, 122 by welding, there are no through-holes in the sides of the side frames 121, 122, and thus penetration of foreign matter such as moisture through the through-holes may be prevented.

In some embodiments, the cross beam 128 may have a notch N for coupling with the center beam 127. The center beam 127 may extend in the line of sight direction past the notch N shown in FIG. 8. The cross beam 128 and the center beam 127 may be engaged to crisscross each other in a third direction (e.g., in the z-axis direction) where they intersect each other.

The height of the cross beam 128 in the third direction (e.g., in the z-axis direction) may be from about 40% to about 90% of the height of the side frames 121, 122. If the height of the cross beam 128 is excessively low, it may not provide sufficient support for the cell units 110. An excessively high height of the cross beam 128 may make it difficult to fix the cell side beams 113 to the cross beam 128.

In some embodiments, the height of the cross beam 128 in the third direction (e.g., in the z-axis direction) may be in the range of about 40% to about 90%, about 45% to about 85%, about 50% to about 80%, about 55% to about 75%, about 60% to about 70%, or any two of these figures, of the height of the side frames 121, 122.

Although embodiments of the present disclosure have been described in detail above, one of ordinary skill in the art to which the present disclosure belongs will be able to make many modifications to the disclosure without departing from the spirit and scope of the disclosure as defined in the appended claims. Accordingly, future modifications of the embodiments will not depart from the art of the disclosure.

### [Description of Reference Numerals]

100: BATTERY PACK
110, 110a, 110b: CELL UNIT
111: BATTERY CELL
112: BUSBAR FRAME
113, 113a, 113b: CELL SIDE BEAM
120: PACK CASE
121, 122: SIDE FRAME
123: REAR COVER
124: FRONT COVER
125: TOP PLATE
126: BASE PLATE
127: CENTER BEAM
128, 128a: CROSS BEAM
1131: PROTRUDING PART
1133, 1133a, 1133b: CONCAVE PART
1135: THROUGH-HOLE

## Claims

1. A battery pack comprising:
a pack case, the pack case including a lower case and an upper case, the upper case and the lower case defining an interior space; and
a plurality of cell units, each cell unit including:
a plurality of battery cells stacked in a first direction, the plurality of cell units being located within the interior space; and
a cell side beam located on a side of the cell unit, wherein the lower case includes:
a first side frame;
a second side frame;
a base plate coupled to a lower part of each of the first and second side frames;
a front cover defining a front side wall of the lower case;
a rear cover defining a rear side wall of the pack case;
a center beam extending in the first direction; and
a cross beam extending in a second direction perpendicular to the first direction,
wherein each of the cell units is located within a space defined by the cross beam, the center beam, the side frames, and one of the front cover or the rear cover, and
wherein each of the cell side beams are coupled to the cross beam.

2. The battery pack of claim 1, wherein a height of each cell side beam is greater than a height of the cross beam.

3. The battery pack of claim 1, wherein each cell side beam includes a concave part, and
wherein the cross beam is at least partially seated within the concave parts of the cell side beams.

4. The battery pack of claim 3, wherein a depth of each concave part is less than or equal to half a thickness in the first direction of the cross beam.

5. The battery pack of claim 3, wherein each concave part extends over an entire length of the corresponding cell side beam in the second direction, the concave part facing the cross beam.

6. The battery pack of claim 3, wherein each cell side beam has a protruding part, the protruding part protruding in the first direction relative to the concave part, the protruding part being configured to be coupled with the cross beam by engagement of a concavo-convex structure.

7. The battery pack of claim 3, wherein each cell side beam has a protruding part, the protruding part protruding in the first direction relative to the concave part, the protruding part being configured to be coupled with the cross beam by fastener.

8. The battery pack of claim 1, wherein the cross beam is fixed to the first side frame and the second side frame by welding.

9. The battery pack of claim 8, wherein a first end of the cross beam is welded to the first side frame and a second end of the cross beam is welded to the second side frame.

10. The battery pack of claim 8, wherein a height of the cross beam is 40% to 90% of a height of the first and second side frames.

11. The battery pack of claim 1, wherein each of the plurality of battery cells of the cell units is at least partially exposed toward at least one of the upper case and the lower case.

12. A battery pack comprising:
a pack case, the pack case including a lower case and an upper case, the lower case and the upper case defining an interior space;
a plurality of cell units, each cell unit including:
a plurality of battery cells stacked in a first direction, the plurality of cell units being located within the interior space; and
a cell side beam located on a side of the cell unit,
wherein the lower case comprises:
a first side frame'
a second side frame;
a base plate coupled to a lower part of each of the first and second side frames;
a front cover defining a front side wall of the lower case;
a rear cover defining a rear side wall of the pack case;
one center beam extending in the first direction; and
a cross beam extending in a second direction perpendicular to the first direction,
wherein cell side beams of adjacent cell units face each other with the cross beam between them,
wherein each of the adjacent cell side beams includes:
a protruding part protruding toward the cross beam; and
a concave part configured to at least partially accommodate the cross beam.

13. The battery pack of claim 12, wherein the adjacent cell side beams located on either side of the cross beam are coupled to the cross beam by bolts inserted in a third direction perpendicular to the first direction and the second direction.

14. The battery pack of claim 12, wherein each cell unit includes an additional side beam, the additional side beam being coupled to the front cover or the rear cover.

15. The battery pack of claim 12, wherein the interior space is divided into four compartments, the four compartments being arranged in a 2x2 configuration by the center beam and the cross beam, and
wherein one cell unit is located in each compartment.
